# EUROPÄISCHE PATENTSCHRIFT

(11) **EP 3 072 658 B1**
(45) Veröffentlichungstag und Bekanntmachung des Hinweises auf die Patenterteilung: **27.06.2018**
(21) Anmeldenummer: 16157960.2
(22) Anmeldetag: 29.02.2016
(51) Int. Cl.: B29C 33/18, B29C 45/14, B29C 49/24, B29C 43/36

(54) **FORMWERKZEUG UND VERFAHREN ZUR FIXIERUNG EINES TRÄGERS IN EINEM FORMWERKZEUG ZUR MINDESTENS PARTIELLEN VERBINDUNG DES TRÄGERS MIT EINER WERKSTOFFSCHICHT, ZUR HERSTELLUNG EINES VERBUNDBAUTEILS**
MOULD AND METHOD FOR FIXING A CARRIER IN A MOULD FOR AT LEAST PARTIAL CONNECTION OF THE CARRIER WITH A MATERIAL LAYER, FOR PRODUCING A COMPOSITE COMPONENT
OUTIL DE FORMAGE ET PROCEDE DE FIXATION D'UN SUPPORT DANS UN OUTIL DE FORMAGE POUR RELIER AU MOINS PARTIELLEMENT LE SUPPORT A UNE COUCHE DE MATERIAU POUR FABRIQUER UN ELEMENT COMPOSITE

(30) Priorität: 23.03.2015 DE 102015104283
(43) Veröffentlichungstag der Anmeldung: 28.09.2016
(73) Patentinhaber: Josef Weischer GmbH & Co. KG, 48282 Emsdetten (DE)
(72) Erfinder: HUNE, Rupert, 49090 Osnabrück (DE)
(74) Vertreter: Bossmeyer, Jörg Peter

(56) Entgegenhaltungen:
- EP-A1- 2 219 842
- US-A1- 2007 262 049
- US-A1- 2012 086 148

## Beschreibung

Die Erfindung betrifft ein Formwerkzeug sowie ein Verfahren zur Fixierung eines Trägers in einem Formwerkzeug zur mindestens partiellen Verbindung des Trägers mit einer Werkstoffschicht, zur Herstellung eines Verbundbauteils.

Unter Formwerkzeugen werden nachfolgend ganz allgemein Schäumwerkzeuge oder Kaschierwerkzeuge verstanden. Ein Formwerkzeug der hier betroffenen Art kann demnach beispielsweise der Herstellung eines eine Schaumstoffschicht aufweisenden Verbundbauteils dienen. Das Verbundbauteil besteht aus einem Träger, der in das Formwerkzeug eingesetzt und mittels eines Vakuums darin fixiert wird. Dabei ist es bekannt, Vakuumsauger einzusetzen, die den Träger punktuell in dem Formwerkzeug festhalten. Darüber hinaus werden innerhalb der Trägeraufnahmegeometrie des Formwerkzeuges unabhängig von den Vakuumsaugern, oder im Zusammenspiel mit diesen, einzelne Vakuumfelder erzeugt, die die Fixierung des Trägers durch die Vakuumsauger ergänzen. Durch die wahllose Verteilung von Vakuumsaugern und Vakuumfeldern ist es bisher jedoch nicht gelungen, den Träger problemlos sowie möglichst verzugs- und spannungsarm in der Trägeraufnahmegeometrie des Formwerkzeuges zu fixieren.

Das Formwerkzeug dient nach der Fixierung des Trägers dazu, den Träger mit einer Werkstoffschicht zu versehen, die als Beschichtung oder als Zwischenschicht ausgeführt sein kann, wobei beispielsweise auch eine Ausstattung mit einer Folie oder ähnlichen Materialien möglich ist. Die dadurch geschaffenen Verbundbauteile kommen beispielsweise in der Automobilindustrie und hier zum Beispiel als Armaturenbrett zum Einsatz, wobei eine besondere Problematik darin besteht, dass derartige Verbundbauteile eine erhebliche Baugröße aufweisen und daher verhältnismäßig schwierig zu handhaben sind, was sich insbesondere darin äußert, dass der Träger zur Herstellung des Verbundbauteils aufgrund der geringen Materialstärke sowie der heute zum Einsatz kommenden Materialien sehr verwindungsweich ist. Aus diesem Grund ist die Einbringung des Trägers in das Formwerkzeug trotz der zum Einsatz kommenden Vakuumsauger beziehungsweise Vakuumfelder immer noch mit einem erheblichen, manuellen Aufwand verbunden. Für die Gewährleistung einer Prozesssicherheit und einer hohen Qualität bei der Herstellung des Verbundbauteils ist es jedoch erforderlich, dass der Träger optimal, das heißt, vollständig und flächig anliegend in dem Formwerkzeug fixiert werden kann. Weitere Schwierigkeiten stellen die bei der Verarbeitung entstehenden, hohen Prozesstemperaturen dar. Durch die vorhandenen Temperatureinflüsse ergeben sich vergleichsweise hohe Wärmedehnungen, so dass sich der Träger dadurch zusätzlich verziehen kann. Formabweichungen des Trägers verschlechtern jedoch insgesamt die Verbindung mit der Werkstoffschicht, was beispielsweise zu unerwünschten Lufteinschlüssen beziehungsweise zur Ausbildung von Lunkern führen kann. Im Ergebnis ist leider zum gegenwärtigen Zeitpunkt immer noch eine unverhältnismäßig hohe Ausschussrate zu verzeichnen, die auf die zuvor erwähnten Probleme zurückzuführen ist.

Ein Formwerkzeug zur Herstellung eines Verbundbauteils, das aus einem in das Formwerkzeug eingesetzten und mittels eines Vakuums darin fixierten Trägers und einer in dem Formwerkzeug zumindest partiell mit dem Träger zu verbindenden Werkstoffschicht besteht, wobei in dem Formwerkzeug eine Trägeraufnahmegeometrie vorhanden ist, geht beispielsweise aus der US 2007/0262049 A1 hervor. Ein elastisch verformbarer Träger wird dabei in seinem zentralen Bereich durch Drucklufteinrichtungen aufgewölbt, um dadurch nach dem Aufbringen eines schmelzbaren Werkstoffes auf den Träger und der nachfolgenden Annäherung eines Oberwerkzeugs an ein Unterwerkzeug des Formwerkzeuges eine gleichmäßige Verteilung des weichen Werkstoffes über die gesamte Fläche des Trägers zu gewährleisten. Während der Aufwölbung des Trägers durch die über Bohrungen zugeführte Druckluft aus der Drucklufteinrichtung erfolgt dabei zeitgleich eine punktuelle Fixierung des Randbereiches des Trägers durch eine Ansaugung über Bohrungen, die ihrerseits mit einer Saugvorrichtung in Verbindung stehen.

Der Erfindung liegt die Aufgabe zugrunde, ein Formwerkzeug bereitzustellen, welches eine einfache und sehr genaue sowie lagegerechte Positionierung des Trägers innerhalb einer im Formwerkzeug vorhandenen Trägeraufnahmegeometrie ermöglicht, wobei ein besonderer Wert auf eine möglichst weit gehende Automatisierung gelegt werden sollte. Darüber hinaus ist ein Verfahren anzugeben, das eine optimierte Fixierung des Trägers in dem Formwerkzeug gestattet.

Die Erfindung löst diese Aufgabenstellung mit den Merkmalen der unabhängigen Patentansprüche 1 und 13.

Weitere Ausgestaltungen der Erfindung sind Gegenstand der sich jeweils anschließenden Unteransprüche.

Ein Formwerkzeug zur Herstellung eines Verbundbauteils, das aus einem in das Formwerkzeug eingesetzten und mittels eines Vakuums darin fixierten Träger und einer in dem Formwerkzeug zumindest partiell mit dem Träger zu verbindenden Werkstoffschicht besteht, wobei in dem Formwerkzeug eine Trägeraufnahmegeometrie vorhanden ist, die Vakuumsauger und mehrere Vakuumfelder aufweist, wurde erfindungsgemäß dahingehend weitergebildet, dass die einzelnen Vakuumfelder von einem ersten Vakuumfeld ausgehend, kaskadenförmig und richtungsorientiert aktiviert werden. Mit der hier vorgestellten Lösung wird der manuelle Aufwand zur Befestigung des Trägers in dem Formwerkzeug auf ein Minimum reduziert. Der Herstellungsprozess des Verbundbauteils lässt sich nahezu vollständig automatisieren. Es bedarf lediglich des Einsetzens des Trägers in die Trägeraufnahmegeometrie, wobei automatisch mindestens ein Vakuumsauger oder ein Vakuumfeld aktiviert wird und den Träger zunächst in dem Formwerkzeug fixiert. Im Anschluss daran werden von dem Vakuumsauger beziehungsweise von dem ersten Vakuumfeld ausgehend, die einzelnen, weiteren Vakuumfelder nacheinander und/oder in Kombination, jedoch kaskadenförmig und in vordefinierten Richtungen aktiviert, so dass der Fixierungsbereich des Trägers innerhalb der Trägeraufnahmegeometrie des Formwerkzeuges stufenweise zunimmt, was bevorzugt selbsttätig fortschreitend, also automatisch, erfolgt. Durch die erfindungsgemäße Ausführung eines Formwerkzeuges wird nicht nur eine optimierte Fixierung des Trägers in dem Formwerkzeug erreicht. Ein weiterer Vorteil dieser Lösung besteht nämlich auch darin, dass bisher sich einstellende Vakuumsverluste nahezu vollständig vermieden werden können. Dies führt zu der Möglichkeit, die Pumpenleistung zur Erzeugung des Vakuums zu reduzieren,
so dass Vakuumpumpen mit geringerer Leistung zum Einsatz kommen können. Ein weiterer Vorteil ist ferner darin zu sehen, dass die vollständige Vakuumleistung exakt zu dem Zeitpunkt zur Verfügung steht, zu dem sie benötigt wird. Das Formwerkzeug ist auf diese Weise insgesamt kostengünstiger herstellbar. Weiterhin wurde durch die Erfindung die Positionierung und die Fixierung des Trägers insgesamt in erheblichem Maße vereinfacht. Die Trägeraufnahmegeometrie wird gemäß der Erfindung in eine Matrix aufgeteilt, die demzufolge kaskadenförmig und richtungsorientiert von den Vakuumfeldern ausgefüllt wird.

Eine erste Ausgestaltung der Erfindung ist darin zu sehen, dass die Außenabmessungen der Vakuumfelder sich von einem ersten Vakuumfeld ausgehend, kaskadenförmig fortschreitend innerhalb der Trägeraufnahmegeometrie erweiternd ausgeführt sind. Anders ausgedrückt erweitern sich die Vakuumfelder beispielsweise von einem Zentrum aus zu den genannten Randbereichen. Diese Erweiterung kann linear, kreuzweise, diagonal oder in zueinander versetzten Reihen erfolgen. Zur Umsetzung dieses Lösungsgedankens bieten sich folglich sehr viele unterschiedliche Geometrien der kaskadenartigen und richtungsorientierten Erweiterung der Vakuumfelder an.

Darüber hinaus geht ein weiterführender Lösungsvorschlag dahin, dass die Trägeraufnahmegeometrie mehrere Vakuumsauger aufweist. Die Verteilung mehrerer Vakuumsauger innerhalb der Trägeraufnahmegeometrie gestattet eine Vereinfachung der anfänglichen Fixierung des Trägers zu Beginn der Bestückung des Formwerkzeuges. Die an dem Formwerkzeug tätige Bedienperson hat lediglich die Aufgabe, den Träger kurzzeitig leicht gegen die Trägeraufnahmegeometrie des Formwerkzeuges zu drücken, bis die Vakuumsauger den Träger angesaugt haben. Die weitergehende Fixierung erfolgt dann vollautomatisch und mit hoher Präzision in der zuvor beschriebenen Weise.

Zur Umsetzung der erfindungsgemäßen Lösung bieten sich nachfolgend erwähnte, alternative oder miteinander kombinierbare Vorgehensweisen an. So ist es einerseits möglich, dass ein an das erste Vakuumfeld unmittelbar angrenzendes, weiteres Vakuumfeld sich mit dem inneren Vakuumfeld zu einem Vakuumkreis verbindend ausgeführt ist. Ebenso können zwei benachbarte Vakuumfelder einen Abstand zueinander aufweisen und in derselben Weise, wie zuvor beschrieben zu einem Vakuumkreis verbunden werden. Diese kaskadenartige Erweiterung des ersten Vakuumfeldes um jeweils ein weiteres Vakuumfeld erfolgt hierbei immer in einer bestimmten Richtung. Durch die Vereinigung des ersten Vakuumfeldes mit jeweils einem weiteren Vakuumfeld entsteht ein Vakuumkreis, der durch Hinzufügung eines weiteren Vakuumfeldes zu dem nächst größeren Vakuumkreis heranwächst. Dieser Vorgang wird wiederholt, bis in der Trägeraufnahmegeometrie ein in sich geschlossener Vakuumkreis gebildet ist, der den Träger vollständig durch das darin gebildete Vakuum in der Trägeraufnahmegeometrie fixiert.

Eine weitere, alternative oder mit den zuvor beschriebenen Varianten kombinierbare Lösungsmöglichkeit besteht darin, dass das innere Vakuumfeld sich mit einem dieses aufnehmenden, also umschließenden, weiteren Vakuumfeld zu einem Vakuumkreis erweiternd ausgeführt ist. Bei dieser Lösung wird zunächst ein in seinen Außenabmessungen erstes, kleineres Vakuumfeld durch Zuschaltung eines in seinen Außenabmessungen größeren Vakuumfeldes, das das erste Vakuumfeld vollständig einschließt, erweitert. Dadurch wird ein erster Vakuumkreis gebildet, dessen Außenabmessungen sich durch Zuschaltung des nächsten Vakuumfeldes mit den nächst größeren Außenabmessungen zu einem noch größeren Vakuumkreis erweitert. Mit anderen Worten werden hierbei zwei nacheinander aktivierte Vakuumfelder von innen nach außen erweitert und grenzen nicht, wie bei den zuvor erwähnten Varianten an einander an beziehungsweise sind sie nicht benachbart zueinander angeordnet, wie dies zuvor ebenfalls beschreiben wurde.

Gemäß einem weiterführenden Vorschlag nach der Erfindung weist wenigstens ein Vakuumfeld mindestens einen Näherungssensor auf, bei dem es sich beispielsweise um einen Vakuumsensor handeln kann. Der Vakuumsensor hat dabei die Aufgabe, ein Signal zu erzeugen, wenn am aktivierten Vakuumfeld ein vorab eingestellter Unterdruck zu verzeichnen ist, der eine zuverlässige Fixierung des Trägers innerhalb dieses Vakuumfeldes gewährleistet. Dadurch ergibt sich eine Kontrollmöglichkeit der Wirksamkeit der Fixierung des Trägers. Eine andere Möglichkeit besteht darin, die Annäherung des Trägers an die Trägeraufnahmegeometrie zu sensieren. Allgemein können für diesen Einsatzzweck sowohl berührungslos aktivierbare und hier als "Näherungssensoren" bezeichnete Sensoren, wie beispielsweise kapazitive, induktive oder optische Sensoren, als auch Berührungssensoren, wie Mikroschalter oder Stößelschalter, zum Einsatz kommen.

Kommt ein Vakuumsensor zum Einsatz, so wird in vorteilhafter Weise und bevorzugt ein Drucksensor eingesetzt, da derartige Drucksensoren handelsüblich sind und damit kostengünstig sowie an die jeweiligen Bedingungen des Formwerkzeuges angepasst, beschafft werden können.

Das vom Näherungssensor erzeugte Signal bietet darüber hinaus auch die Möglichkeit, das nächstfolgende Vakuumfeld zu aktivieren und somit die erforderliche Schaltung der einzelnen Vakuumfelder umzusetzen. Eine konkrete Lösungsmöglichkeit hierfür besteht darin, dass das Messsignal des Näherungssensors zur Ansteuerung einzelner Vakuumsaugventile verwendet wird, sodass durch das damit realisierbare Öffnen eines entsprechenden Vakuumsaugventils in mindestens einem Vakuumfeld ein Vakuum erzeugt werden kann. Bevorzugt weist demnach jedes Vakuumfeld einen entsprechenden Näherungssensor oder auch einen Vakuumsensor auf.

Da in einem erfindungsgemäßen Formwerkzeug hauptsächlich mit Vakuum gearbeitet wird, bietet es sich an, die Vakuumsaugventile als pneumatisch angesteuerte Vakuumsaugventile auszuführen und zu betreiben. Damit sind keine zusätzlichen Aufwendungen für den Betrieb der Vakuumsaugventile erforderlich, weil entsprechende Aggregate ohnehin vorhanden sind. Weitere, alternative und problemlos umsetzbare Möglichkeiten bestehen ferner darin, die Vakuumsaugventile mechanisch oder elektrisch anzusteuern.

Eine spezielle Ausführungsvariante eines Vakuumsaugers besteht darin, dass dieser ein Faltenbalgsauger ist. Natürlich können auch mehrere oder sämtliche Vakuumsauger als Faltenbalgsauger ausgeführt werden. Hierbei handelt es sich ebenfalls um handelsübliche Bauelemente, die kostengünstig beschafft und in das Formwerkzeug eingesetzt werden können, so dass sich dessen Herstellung erheblich vereinfacht.

Eine weitere Ausführungsform zur Vereinfachung des Formwerkzeuges ist darin zu sehen, dass die Vakuumsauger und die Vakuumsaugventile mit einem gemeinsamen Vakuumverteiler gekoppelt sind. Auf diese Weise können sowohl die Vakuumsauger, als auch die Vakuumsaugventile zentral mit dem für ihren Betrieb erforderlichen Vakuum versorgt werden. Dadurch wird es auch möglich, nur eine einzige Vakuumserzeugungseinrichtung, also beispielsweise nur eine Vakuumpumpe zum Einsatz zu bringen.

Zur Vereinfachung der Handhabung des Formwerkzeuges nach der Erfindung besteht eine konkrete Ausgestaltung darin, dass das Formwerkzeug mehrteilig ausgeführt ist und aus einem Oberwerkzeug und einem Unterwerkzeug besteht, die dichtend miteinander verbindbar sind, wobei das Oberwerkzeug und/oder das Unterwerkzeug Vakuumsauger und/oder Vakuumfelder aufweist beziehungsweise aufweisen. Durch diese konstruktive Ausführung des Formwerkzeuges können das Oberwerkzeug und das Unterwerkzeug beispielsweise mit einer scharnierartigen Gelenkverbindung gekoppelt werden, so dass die Bestückung mit dem Träger sowie die Entnahme des fertig gestellten Verbundbauteils wesentlich vereinfacht wird. Mit einem derartig gestalteten Formwerkzeug können zudem auch komplexe Verbundbauteile hergestellt werden.

Das erfindungsgemäße Verfahren zur Fixierung eines Trägers in einem Formwerkzeug zur mindestens partiellen Verbindung des Trägers mit einer Werkstoffschicht, zur Herstellung eines Verbundbauteils ist durch folgende Verfahrensschritte gekennzeichnet:
- Ansetzen eines mit einer Werkstoffschicht zu versehenden Trägers an mindestens einem in einer Trägeraufnahmegeometrie eines Formwerkzeuges vorhandenen Vakuumsauger, dessen Vakuum den Träger zunächst in wenigstens einem Punkt fixiert,
- Freigabe eines ersten, den Vakuumsauger aufnehmenden Vakuumfeldes durch Ansteuerung mindestens eines Vakuumsaugventils, sodass der Träger in diesem Vakuumfeld vollständig angesaugt wird,
- anschließende Freigabe mindestens eines weiteren Vakuumfeldes, das das erste Vakuumfeld einschließt oder sich an das erste Vakuumfeld anschließt, sodass dadurch ein Vakuumkreis entsteht und der Träger somit durch eine kaskadenförmige Erweiterung der einzelnen Vakuumfelder fortschreitend in dem Formwerkzeug fixiert wird.

Das hier vorgestellte Verfahren verdeutlicht die Vorgehensweise zur Fixierung des Trägers in dem Formwerkzeug durch Anwendung einer kaskadenförmige und richtungsorientierten Erweiterung der einzelnen Vakuumfelder, die sich jeweils zu einem Vakuumkreis miteinander verbinden und damit eine fortschreitende, also beispielsweise von innen nach außen anwachsende Vakuumfläche bilden, die letztlich den Träger optimal in der Trägeraufnahmegeometrie des Formwerkzeuges fixiert. Das Verfahren ist verhältnismäßig einfach umsetzbar und gewährleistet eine hohe Prozesssicherheit sowie einen hohen Automatisierungsgrad. Darüber hinaus kann hierbei, verglichen mit einem manuellen Fixieren des Trägers, die Gesamtzykluszeit zur Herstellung eines Verbundbauteils in erheblichem Maße reduziert werden.

Dabei kann gemäß einer ersten Ausgestaltung des Verfahrens ein wesentlicher Vorteil darin gesehen werden, dass ein Vakuumsensor permanent oder in zeitlich konstanten Abständen das anliegende Vakuum in einem Vakuumfeld sensiert und das somit erzeugte Signal zur Ansteuerung von Vakuumsaugventilen genutzt wird, wobei ein nachfolgendes Vakuumsaugventil erst freigegeben wird, wenn an dem zuvor mit einem Vakuum beaufschlagten Vakuumfeld ein definiertes Vakuum erfasst worden ist. Durch diese Vorgehensweise kann vermieden werden, dass bereits ein nächstes Vakuumfeld mit Vakuum versorgt wird, wenn das vorherige Vakuumfeld den Träger noch nicht in ausreichender Weise in der Trägeraufnahmegeometrie des Formwerkzeuges fixiert hat. Damit wird jedoch auch eine Möglichkeit geschaffen, die Leistung der Vakuumserzeugungseinrichtung, also beispielsweise der Vakuumpumpe, zu reduzieren. Im Ergebnis ergibt sich somit eine wiederholbare und hundertprozentig nachvollziehbare Qualität der Fixierung.

Ebenso verhält es sich mit dem Vorschlag, dass der Schäumvorgang zur Herstellung des Verbundbauteils erst gestartet wird, wenn der letzte Vakuumsensor des letzten Vakuumfeldes das definierte Vakuum erfasst hat. In diesem Zustand ist der Träger extrem gleichmäßig in der Trägeraufnahmegeometrie fixiert, so dass der Auftrag der Beschichtung auf den Träger mit gleich bleibender Qualität erfolgen kann.

Das erfindungsgemäße Verfahren kann auch dadurch verbessert werden, dass der Vorgang zur Herstellung des Verbundbauteils erst gestartet wird, wenn wenigstens ein Vakuumsensor einen Mindestwert eines Vakuums innerhalb eines Vakuumkreises erfasst hat. In diesem Fall wird der absolute Betrag des Vakuums erfasst und als Steuerungssignal genutzt, um den Schäumvorgang zu starten. Alternativ hierzu geht ein Vorschlag jedoch auch dahin, den Schäumvorgang erst dann zu starten, wenn wenigstens ein Vakuumsensor einen Mindestwert eines Vakuums mehrerer Vakuumfelder erfasst hat. Anders ausgedrückt besteht der Vorteil dieser Lösung darin, beispielsweise nur einen Vakuumsensor zu verwenden und damit das Vakuum mehrerer Vakuumfelder zu messen. Erst wenn dabei insgesamt ein vorab definierbarer Wert für das Vakuum erreicht ist, wird der Schäumvorgang gestartet. Bei den genannten Vorgehensweisen werden folglich nicht die Vakuumventile, sondern die Vakuumfelder beziehungsweise Vakuumkreise sensiert. Damit kann eine Prozesssicherheit gewährleistet und der Träger optimal in der Trägeraufnahmegeometrie fixiert werden.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Blick in ein Formwerkzeug in einer ersten Ausführungsvariante,
- Figur 2:: einen Blick in ein Formwerkzeug in einer zweiten Ausführungsvariante,
- Figur 3:: einen Blick in ein Formwerkzeug in einer dritten Ausführungsvariante,
- Figur 4:: einen Blick in ein Formwerkzeug in einer vierten Ausführungsvariante,
und
- Figur 5:: einen vereinfachten Vakuumschaltplan.

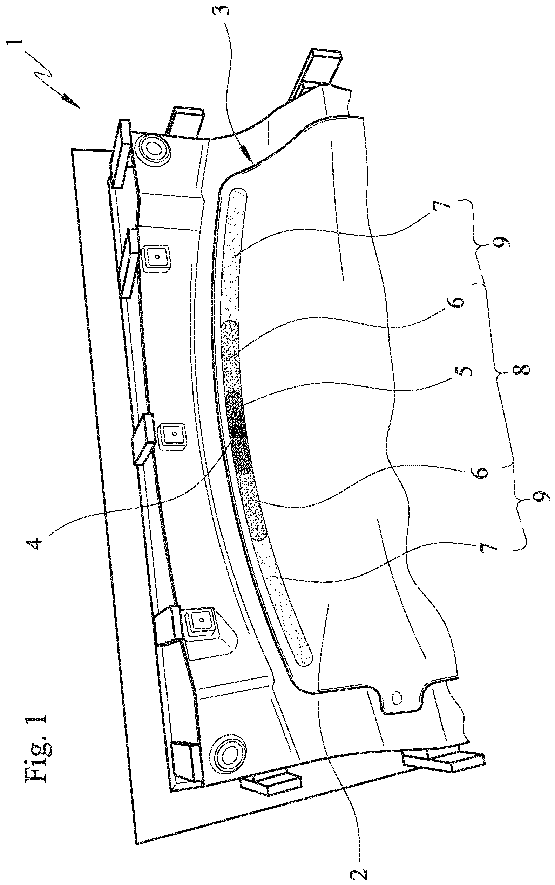

Die Figur 1 erlaubt einen Blick in einen Teil eines Oberwerkzeuges eines Formwerkzeuges 1, dass eine Trägeraufnahmegeometrie 3 aufweist, in die vorliegend ein Träger 2 aus einem Kunststoff eingesetzt ist. Der Träger 2 wird in dem Formwerkzeug 1 in einem nachfolgenden Arbeitsgang mit einer Beschichtung, also beispielsweise mit einer Schaumstoffschicht versehen, die zum Beispiel durch ein Spritzverfahren auf die Oberfläche des Trägers 2 aufgebracht wird. Um eine gleich bleibende Qualität der Herstellung eines dadurch geschaffenen Verbundbauteils zu gewährleisten, ist es erforderlich, dass der Träger 2 verzugs- und spannungsfrei in der Trägeraufnahmegeometrie 3 des Formwerkzeuges 1 aufgenommen ist. Hierfür weist das in Figur 1 dargestellte Ausführungsbeispiel zunächst einen Vakuumsauger 4 auf, der sich etwa mittig des Trägers 2 in dem Formwerkzeug 1 befindet. Das Einsetzen des Trägers 2 erfolgt durch eine Bedienperson, die lediglich die Aufgabe hat, den Träger 2 im Bereich des Vakuumsaugers 4 an die Trägeraufnahmegeometrie 3 anzusetzen. Nach der dabei erfolgenden Aktivierung des Vakuumsaugers 4 wird der Träger 2 zunächst vorläufig in dem Formwerkzeug 1 gehalten. Zu diesem Zeitpunkt besteht jedoch noch die Gefahr, dass sich der Träger 2 innerhalb der Trägeraufnahmegeometrie 3 in unerwünschter Weise verformen kann. Um dies zu verhindern, weist die Ausführung des Formwerkzeuges 1 in Figur 1 zunächst ein erstes Vakuumfeld 5 auf, in dem sich in diesem Fall der Vakuumsauger 4 befindet. Anders ausgedrückt umschließt das erste Vakuumfeld 5 den Vakuumsauger 4. Nach dem Ansetzen des Trägers 2 an dem Vakuumsauger 4 wird das erste Vakuumfeld 5 aktiviert und mit einem Vakuum beaufschlagt, so dass dieser Bereich des Trägers 2 vollständig an die Trägeraufnahmegeometrie 3 angesaugt wird. Im Anschluss daran erfolgt die Aktivierung der in Richtung der Außenabmessung des Trägers 2 seitlich links und rechts neben dem ersten Vakuumfeld 5 vorhandenen Vakuumfelder 6, sodass dadurch eine kaskadenförmig und richtungsorientierte Aktivierung der Vakuumfelder gegeben ist. In dieser Phase der Fixierung des Trägers 2 in der Trägeraufnahmegeometrie 3 haben sich folglich bereits das Vakuumfeld 5 und die Vakuumfelder 6 zu einem gemeinsamen Vakuumkreis 8 verbunden, der bereits eine relativ große Fläche des Trägers 2 an die Trägeraufnahmegeometrie 3 des Formwerkzeuges 1 ansaugt. In einem weiteren Schritt erfolgt nunmehr auch die Aktivierung der sich seitlich an die Vakuumfelder 6 anschließenden Vakuumfelder 7, so dass diese zusammen mit den übrigen Vakuumfeldern 5, 6 beziehungsweise dem dadurch geschaffenen Vakuumkreis 8 einen Vakuumkreis 9 bilden, der die gesamte Breite des Trägers 2 umfasst und damit den Träger 2 gleichmäßig in der Trägeraufnahmegeometrie 3 des Formwerkzeuges 1 fixiert.

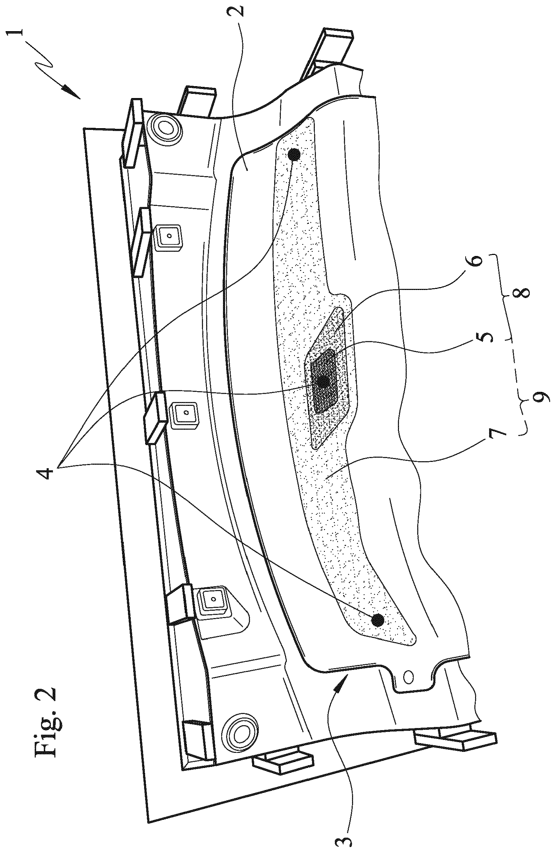

Eine zu der Darstellung in Figur 1 abweichende Ausführungsvariante eines Formwerkzeuges 1 geht aus der Figur 2 hervor. Hierbei wird der durch eine Bedienperson in die Trägeraufnahmegeometrie 3 eingesetzte Träger 2 durch insgesamt drei Vakuumsauger 4 vorläufig fixiert. Diese Fixierung ist bei dem gezeigten Ausführungsbeispiel bereits etwas genauer, als es bei der Variante der Fall war, die im Zusammenhang mit der Beschreibung der Figur 1 erläutert wurde. Die Besonderheit des Formwerkzeuges 1 in Figur 2 besteht darin, dass der mittig der Trägeraufnahmegeometrie 3 angeordnete Vakuumsauger 4 vollständig in einem ersten Vakuumfeld 5 aufgenommen und von diesem umschlossen ist. Nach der Aktivierung dieses ersten Vakuumfeldes 5 wird ein weiteres Vakuumfeld 6 mit einem Vakuum beaufschlagt, so dass die Vakuumfelder 5 und 6 gemeinsam einen Vakuumkreis 8 bilden, der den Träger 2 bereits in verbesserter Weise an die Trägeraufnahmegeometrie 3 ansaugt. Im Anschluss hieran erfolgt schließlich noch die Aktivierung des Vakuumfeldes 7, das sowohl den mittleren Vakuumsauger 4, das Vakuumfeld 5, als auch das Vakuumfeld 6, also insgesamt den ersten Vakuumkreis 8, vollständig aufnimmt und umschließt. Dadurch wird ein in seinen Abmessungen annähernd der Trägeraufnahmegeometrie 3 entsprechender Vakuumkreis 9 gebildet, der den Träger 2 nunmehr optimal an die Trägeraufnahmegeometrie 3 ansaugt.

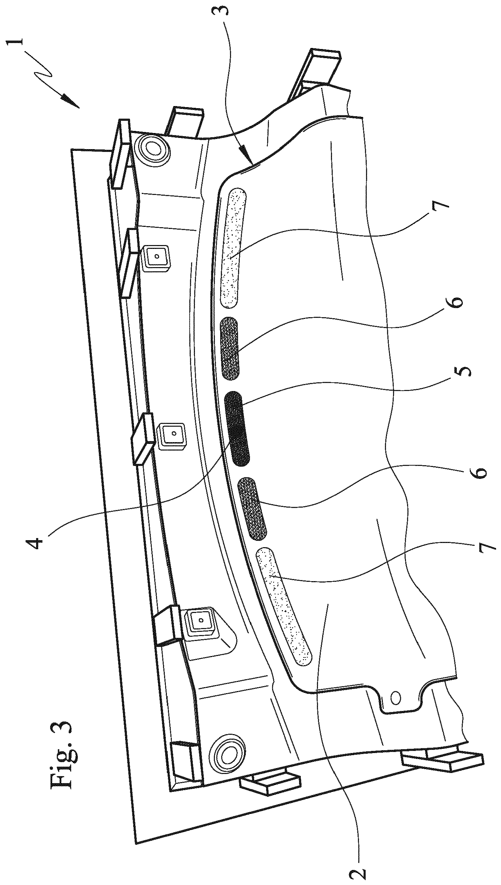

Das in der Figur 3 gezeigte Beispiel für ein Formwerkzeug weist im Unterschied zu dem im Zusammenhang mit der Figur 1 beschriebenen benachbart und mit einem geringen Abstand zueinander angeordnete Vakuumfelder 5, 6, 7 auf, die ausgehend von dem ersten Vakuumfeld 5, in dem sich hier auch der Vakuumsauger 4 befindet, kaskadenförmig und richtungsorientiert, das heißt, bezogen auf die dargestellte Ausführungsvariante, zu beiden Seiten des ersten Vakuumfeldes 5 in Richtung des Randbereiches der Trägeraufnahmegeometrie 3 nacheinander zugeschaltet werden. Im Rahmen dieser Lösung können aus einzelnen oder mehreren Vakuumfeldern, wie auch bei den zuvor bereits beschriebenen Ausführungen, durch Zusammenschluss Vakuumkreise gebildet werden, was in der Darstellung der Figur 3 jedoch nicht nochmals explizit gezeigt ist.

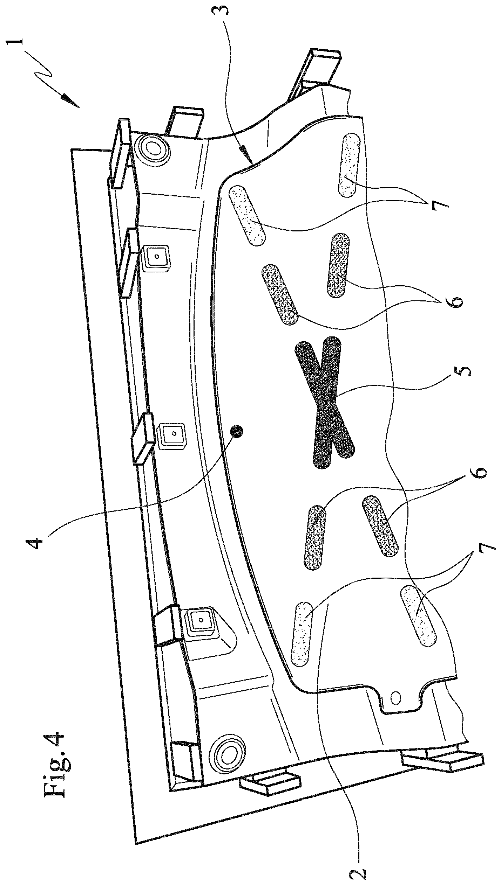

Ähnlich verhält es sich auch bei dem in der Figur 4 dargestellten Formwerkzeug 1. Hier sind die Vakuumfelder 5, 6, 7 kreuzweise verlaufend angeordnet, sodass eine möglichst gleichmäßige Verteilung der Vakuumfelder 5-7 innerhalb der Trägeraufnahmegeometrie 3 erreicht werden kann. Auch hierbei können wieder einzelne oder mehrere Vakuumfelder zu Vakuumkreisen vereinigt werden.

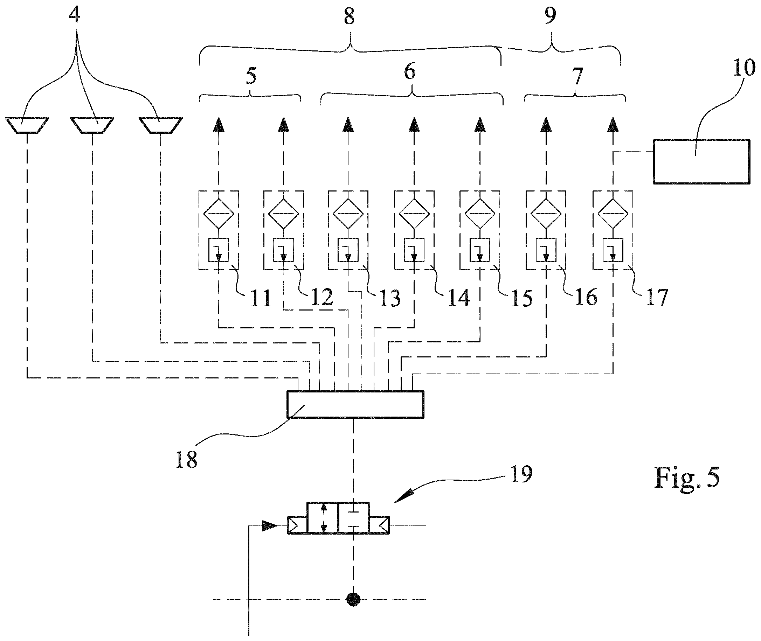

Zur besseren Veranschaulichung der Wirkungsweise des im Zusammenhang mit der Beschreibung der Ausführungsbeispiele eines Formwerkzeuges 1 dient das in Figur 5 dargestellte Prinzipschaltbild. Ein Vakuumsventil 19, über das das gezeigte System mit einem Vakuum versorgt werden kann, ist unmittelbar mit einem Vakuumverteiler 18 gekoppelt, von dem ausgehend diverse Vakuumleitungen die einzelnen Vakuumsauger 4 sowie diverse Vakuumsaugventile 11-17 mit einem Vakuum versorgt werden. Die Wirkungsweise der Vakuumsauger 4 wurde bereits im Zusammenhang mit der Beschreibung der Figur 2 erläutert. Wie aus der Figur 3 ersichtlich wird, werden jeweils mehrere Vakuumsaugventile verwendet, um ein Vakuumfeld 5, 6 oder 7 anzusteuern. So dienen beispielsweise die Vakuumsaugventile 11 und 12 der Ansteuerung des ersten Vakuumfeldes 5, die Vakuumssaugventile 13, 14, 15 der Ansteuerung des zweiten Vakuumfeldes 6 und die Vakuumsaugventile 16 und 17 der Ansteuerung des Vakuumsfeldes 7. Bei der in Figur 3 gezeigten Ausführungsvariante ist ein Vakuumsensor 10 im letzten Vakuumfeld 7 vorgesehen, dessen Messsignal mit einem vorab eingestellten Vakuumsignal verglichen wird, so dass mittels einer hierfür geeigneten Steuerungseinheit der Auftrag der Beschichtung innerhalb des Formwerkzeuges 1 erst aktiviert wird, wenn am letzten Vakuumfeld 7 mittels des Vakuumsensors 10 signalisiert wird, dass das erforderliche Vakuum anliegt und damit auch der Vakuumkreis 9 bis in die Randbereiche des Trägers 2 ein Vakuum zur Verfügung stellt, das gewährleistet, dass der Träger 2 optimal in der Trägeraufnahmegeometrie 3 fixiert ist.

### BEZUGSZEICHENLISTE:

- 1: Formwerkzeug
- 2: Träger
- 3: Trägeraufnahmegeometrie
- 4: Vakuumsauger
- 5: Vakuumfeld
- 6: Vakuumfeld
- 7: Vakuumfeld
- 8: Vakuumkreis
- 9: Vakuumkreis
- 10: Näherungssensor
- 11-17: Vakuumsaugventil
- 18: Vakuumverteiler
- 19: Vakuumventil

## Patentansprüche

1. Formwerkzeug zur Herstellung eines Verbundbauteils, das aus einem in das Formwerkzeug (1) eingesetzten und mittels eines Vakuums darin fixierten Träger (2) und einer in dem Formwerkzeug (1) zumindest partiell mit dem Träger (2) zu verbindenden Werkstoffschicht besteht, wobei in dem Formwerkzeug (1) eine Trägeraufnahmegeometrie (3) vorhanden ist, die Vakuumsauger (4) und mehrere Vakuumfelder (5, 6, 7) aufweist, **dadurch gekennzeichnet, dass** das Formwerkzeug derart gestalltet ist, daß die einzelnen Vakuumfelder (5, 6, 7) von einem ersten Vakuumfeld (5) ausgehend, kaskadenförmig und richtungsorientiert aktiviert werden.

2. Formwerkzeug nach Anspruch 1,
**dadurch gekennzeichnet, dass**
die Außenabmessungen der Vakuumfelder (5, 6, 7) sich von einem ersten Vakuumfeld (5) ausgehend, kaskadenförmig fortschreitend innerhalb der Trägeraufnahmegeometrie (3) erweiternd ausgeführt sind.

3. Formwerkzeug nach einem der vorstehend genannten Ansprüche,
**dadurch gekennzeichnet, dass**
die Trägeraufnahmegeometrie (3) mehrere Vakuumsauger (4) aufweist.

4. Formwerkzeug nach einem der vorstehend genannten Ansprüche,
**dadurch gekennzeichnet, dass**
mindestens ein zu dem ersten Vakuumfeld (5) benachbartes oder an das erste Vakuumfeld (5) angrenzendes, weiteres Vakuumfeld (6, 7) sich mit dem ersten Vakuumfeld (5) beziehungsweise mit dem benachbarten Vakuumfeld (5 und/oder 6 und/oder 7) zu einem Vakuumkreis (8, 9) verbindend ausgeführt ist.

5. Formwerkzeug nach einem der vorstehend genannten Ansprüche,
**dadurch gekennzeichnet, dass**
das erste Vakuumfeld (5) sich mit wenigstens einem dieses umschließenden, weiteren Vakuumfeld (6) zu einem Vakuumkreis (8) erweiternd ausgeführt ist.

6. Formwerkzeug nach einem der vorstehend genannten Ansprüche,
**dadurch gekennzeichnet, dass**
wenigstens ein Vakuumfeld (5, 6, 7) mindestens einen Näherungssensor (10) aufweist.

7. Formwerkzeug nach Anspruch 6,
**dadurch gekennzeichnet, dass**
der Näherungssensor (10) ein Drucksensor ist.

8. Formwerkzeug nach Anspruch 6 oder 7,
**dadurch gekennzeichnet, dass**
das Messsignal des Näherungssensors (10) zur Ansteuerung einzelner Vakuumsaugventile (11, 12, 13, 14, 15, 16, 17) nutzbar ist, sodass durch den Öffnungszustand eines Vakuumsaugventils (11, 12, 13, 14, 15, 16, 17) in mindestens einem Vakuumfeld (5, 6, 7) ein Vakuum gegeben ist.

9. Formwerkzeug nach Anspruch 8,
**dadurch gekennzeichnet, dass**
die Vakuumsaugventile (11, 12, 13, 14, 15, 16, 17) pneumatisch, mechanisch oder elektrisch angesteuerte Vakuumsaugventile sind.

10. Formwerkzeug nach einem der vorstehend genannten Ansprüche,
**dadurch gekennzeichnet, dass**
mindestens ein Vakuumsauger (4) ein Faltenbalgsauger ist.

11. Formwerkzeug nach einem der vorstehend genannten Ansprüche,
**dadurch gekennzeichnet, dass**
die Vakuumsauger (4) und die Vakuumsaugventile (11, 12, 13, 14, 15, 16, 17) mit einem gemeinsamen Vakuumverteiler (18) gekoppelt sind.

12. Formwerkzeug nach einem der vorstehend genannten Ansprüche,
**dadurch gekennzeichnet, dass**
das Formwerkzeug (1) mehrteilig ausgeführt ist und aus einem Oberwerkzeug und einem Unterwerkzeug besteht, die dichtend miteinander verbindbar sind, wobei das Oberwerkzeug und/oder das Unterwerkzeug Vakuumsauger (4) und/oder Vakuumfelder (5, 6, 7) aufweist beziehungsweise aufweisen.

13. Verfahren zur Fixierung eines Trägers (2) in einem Formwerkzeug (1) zur mindestens partiellen Verbindung des Trägers (2) mit einer Werkstoffschicht, zur Herstellung eines Verbundbauteils, **gekennzeichnet durch** folgende Verfahrensschritte:
- Ansetzen eines mit einer Werkstoffschicht zu versehenden Trägers (2) an mindestens einen in einer Trägeraufnahmegeometrie (3) eines Formwerkzeuges (1) vorhandenen Vakuumsauger (4), dessen Vakuum den Träger (2) zunächst in wenigstens einem Punkt fixiert,
- Freigabe eines ersten, den Vakuumsauger (4) aufnehmenden Vakuumfeldes (5) durch Ansteuerung mindestens eines Vakuumsaugventils (11, 12), sodass der Träger (2) in diesem Vakuumfeld (5) vollständig angesaugt wird,
- anschließende Freigabe mindestens eines weiteren Vakuumfeldes (6), das das erste Vakuumfeld (5) einschließt oder sich an das erste Vakuumfeld (5) anschließt, sodass dadurch ein Vakuumkreis (8) entsteht und der Träger (2) somit durch eine kaskadenförmige und richtungsorientierte Erweiterung der Vakuumfelder (5, 6, 7) in dem Formwerkzeug (1) fixiert wird.

14. Verfahren nach Anspruch 13,
**dadurch gekennzeichnet, dass**
ein Vakuumsensor (10) permanent oder in zeitlich konstanten Abständen das anliegende Vakuum in einem Vakuumfeld (5, 6, 7) sensiert und das somit erzeugte Signal zur Ansteuerung von Vakuumsaugventilen (11, 12, 13, 14, 15, 16, 17) genutzt wird, wobei ein nächstfolgendes Vakuumsaugventil erst freigegeben wird, wenn an dem zuvor mit einem Vakuum beaufschlagten Vakuumfeld ein definiertes Vakuum erfasst worden ist.

15. Verfahren nach Anspruch 14,
**dadurch gekennzeichnet, dass**
die Ergänzung des Trägers (2) um die Werkstoffschicht zur Herstellung des Verbundbauteils erst gestartet wird, wenn der letzte Vakuumsensor (10) des letzten Vakuumfeldes (5, 6, 7) das definierte Vakuum erfasst hat.

16. Verfahren nach Anspruch 13,
**dadurch gekennzeichnet, dass**
die Ergänzung des Trägers (2) um die Werkstoffschicht zur Herstellung des Verbundbauteils erst gestartet wird, wenn wenigstens ein Vakuumsensor (10) einen Mindestwert eines Vakuums innerhalb mindestens eines Vakuumkreises (8, 9) oder eines Vakuums mehrerer Vakuumfelder (5, 6, 7) erfasst hat.

## Claims

1. Forming tool for producing a composite component which consists of a carrier (2) inserted into the forming tool (1) and fixed therein by means of a vacuum and a material layer to be connected in the forming tool (1) at least partially to the carrier (2), wherein a carrier receiving geometry (3) is present in the forming tool (1), which comprises vacuum cups (4) and a plurality of vacuum fields (5, 6, 7),
**characterised in that**
the forming tool is designed such that
the individual vacuum cups (5, 6, 7) are activated in a cascade shape and direction-oriented, proceeding from a first vacuum field (5).

2. Forming tool according to Claim 1,
**characterised in that**
the outer dimensions of the vacuum fields (5, 6, 7) are designed proceeding from a first vacuum field (5), extending in a cascade shape advancing inside the carrier receiving geometry (3).

3. Forming tool according to any one of the preceding claims,
**characterised in that**
the carrier receiving geometry (3) comprises a plurality of vacuum cups (4).

4. Forming tool according to any one of the preceding claims,
**characterised in that**
at least one further vacuum field (6, 7) adjacent to the first vacuum field (5) or adjoining the first vacuum field (5) is designed with the first vacuum field (5) or with the adjacent vacuum field (5 and/or 6 and/or 7) connecting to a vacuum circuit (8, 9).

5. Forming tool according to any one of the preceding claims,
**characterised in that**
the first vacuum field (5) is designed with at least one further vacuum field (6) enclosing it extending to a vacuum circuit (8).

6. Forming tool according to any one of the preceding claims,
**characterised in that**
at least one vacuum field (5, 6, 7) comprises at least one proximity sensor (10).

7. Forming tool according to Claim 6,
**characterised in that**
the proximity sensor (10) is a pressure sensor.

8. Forming tool according to Claim 6 or 7,
**characterised in that**
the measurement signal of the proximity sensor (10) can be used to actuate individual vacuum suction valves (11, 12, 13, 14, 15, 16, 17) such that a vacuum is present in at least one vacuum field (5, 6, 7) by way of the opening state of a vacuum suction valve (11, 12, 13, 14, 15, 16, 17).

9. Forming tool according to Claim 8,
**characterised in that**
the vacuum suction valves (11, 12, 13, 14, 15, 16, 17) are pneumatically, mechanically or electrically actuated vacuum suction valves.

10. Forming tool according to any one of the preceding claims,
**characterised in that**
at least one vacuum cup (4) is a bellows suction cup.

11. Forming tool according to any one of the preceding claims,
**characterised in that**
the vacuum cups (4) and the vacuum suction valves (11, 12, 13, 14, 15, 16, 17) are coupled to a common vacuum distributor (18).

12. Forming tool according to any one of the preceding claims,
**characterised in that**
the forming tool (1) is designed in multiple parts and consists of an upper tool and a lower tool, which are tightly connectable to one another, wherein the upper tool and/or the lower tool comprises or comprise vacuum cups (4) and/or vacuum fields (5, 6, 7).

13. Method of fixing a carrier (2) in a forming tool (2) for at least partial connection of the carrier (2) to a material layer, to produce a composite component, **characterised by** the following method steps:
- positioning a carrier (2) to be provided with a material layer at at least one vacuum cup (4) present in a carrier receiving geometry (3) of a forming tool (1), whose vacuum firstly fixes the carrier (2) in at least one point,
- releasing a first vacuum field (5) receiving the vacuum cup (4) by actuating at least one vacuum suction valve (11, 12) such that the carrier (2) is fully suctioned in this vacuum field (5),
- subsequently enabling at least one further vacuum field (6), which includes the first vacuum field (5) or adjoins the first vacuum field (5) such that a vacuum circuit (8) consequently results and the carrier (2) is thus fixed by a cascade-shaped and direction-oriented extension of the vacuum fields (5, 6, 7) in the forming tool (1).

14. Method according to Claim 13,
**characterised in that**
a vacuum sensor (10) senses the applied vacuum in a vacuum field (5, 6, 7) permanently or in time-constant intervals and the signal thus generated is used to actuate vacuum suction valves (11, 12, 13, 14, 15, 16, 17), wherein a subsequent vacuum suction valve is only enabled when a defined vacuum has been detected at the vacuum field to which a vacuum was previously applied.

15. Method according to Claim 14,
**characterised in that**
the supplementing of the carrier (2) by the material layer to produce the composite component is only started when the last vacuum sensor (10) of the last vacuum field (5, 6, 7) has detected the defined vacuum.

16. Method according to Claim 13,
**characterised in that**
the supplementing of the carrier (2) by the material layer to produce the composite component is only started when at least one vacuum sensor (10) has detected a minimum value of a vacuum inside at least one vacuum circuit (8, 9) or a vacuum of a plurality of vacuum fields (5, 6, 7).

## Revendications

1. Outil de moulage pour la fabrication d'un élément composite, qui est constitué d'un support (2) inséré dans l'outil de moulage (1) et fixé à l'intérieur de celui-ci au moyen d'un vide, et d'une couche de matériau à lier dans l'outil de moulage (1) au moins partiellement avec le support (2), une géométrie de logement de support (3) existant dans l'outil de moulage (1), qui comprend des ventouses (4) et plusieurs zones sous vide (5, 6, 7),
**caractérisé en ce que**
l'outil de moulage est conçu de façon à ce que les différentes zones sous vide (5, 6, 7) sont activées en cascade et dans une direction déterminée à partir d'une première zone sous vide (5).

2. Outil de moulage selon la revendication 1,
**caractérisé en ce que**
les dimensions extérieures des zones sous vide (5, 6, 7) s'élargissent, à partir d'une première zone sous vide (5), en cascade de manière progressive à l'intérieur de la géométrie de logement de support (3).

3. Outil de moulage selon l'une des revendications précédentes,
**caractérisé en ce que**
la géométrie de logement de support (3) comprend plusieurs ventouses (4).

4. Outil de moulage selon l'une des revendications précédentes,
**caractérisé en ce que**
au moins une autre zone sous vide (6, 7), adjacente de la première zone sous vide (5) ou limitrophe de la première zone sous vide (5), est conçue de façon à être reliée avec la première zone sous vide (5) ou avec la zone sous vide adjacente (5 et/ou 6 et/ou 7), afin d'obtenir un circuit de vide (8, 9).

5. Outil de moulage selon l'une des revendications précédentes,
**caractérisé en ce que**
la première zone sous vide (5) est conçue de façon à s'élargir, avec au moins une autre zone sous vide (6) entourant celle-ci, afin d'obtenir un circuit de vide (8).

6. Outil de moulage selon l'une des revendications précédentes,
**caractérisé en ce que**
au moins une zone sous vide (5, 6, 7) comprend au moins un capteur de proximité (10).

7. Outil de moulage selon la revendication 6,
**caractérisé en ce que**
le capteur de proximité (10) est un capteur de pression.

8. Outil de moulage selon la revendication 6 ou 7,
**caractérisé en ce que**
le signal de mesure du capteur de proximité (10) peut être utilisé pour le contrôle de différents soupapes à vide (11, 12, 13, 14, 15, 16, 17), de façon à ce que l'état d'ouverture d'une soupape à vide (11, 12, 13, 14, 15, 16, 17) permet de générer un vide dans au moins une zone sous vide (5, 6, 7).

9. Outil de moulage selon la revendication 8,
**caractérisé en ce que**
les soupapes à vide (11, 12, 13, 14, 15, 16, 17) sont des soupapes à vide pneumatiques, mécaniques ou électriques.

10. Outil de moulage selon l'une des revendications précédentes,
**caractérisé en ce que**
au moins une ventouse (4) est une ventouse à soufflets.

11. Outil de moulage selon l'une des revendications précédentes,
**caractérisé en ce que**
les ventouses (4) et les soupapes à vide (11, 12, 13, 14, 15, 16, 17) sont couplées avec un répartiteur de vide commun (18).

12. Outil de moulage selon l'une des revendications précédentes,
**caractérisé en ce que**
l'outil de moulage (1) est conçu en plusieurs pièces et est constitué d'un outil supérieur et d'un outil inférieur, qui peuvent être reliés entre eux de manière étanche, l'outil supérieur et/ou l'outil inférieur comprenant des ventouses (4) et/ou des zones sous vide (5, 6, 7).

13. Procédé de fixation d'un support (2) dans un outil de moulage (1) pour la liaison au moins partielle du support (2) avec une couche de matériau, pour la fabrication d'un élément composite, **caractérisé par** les étapes suivantes :
- fixation d'un support (2) à munir d'une couche de matériau sur au moins une ventouse (4) disposée dans une géométrie de logement de support (3) d'un outil de moulage (1), dont le vide fixe le support (2) d'abord sur au moins un point,
- activation d'une première zone sous vide (5) logeant la ventouse (4) par commande d'au moins une soupape à vide (11, 12) de façon à ce que le support (2) soit entièrement aspiré dans cette zone sous vide (5),
- activation d'au moins une autre zone sous vide (6), qui inclut la première zone sous vide (5), de façon à ce qu'un circuit à vide (8) en résulte et de façon à ce que le support (2) soit ainsi fixé par un élargissement en cascade et orienté des zones sous vide (5, 6, 7) dans l'outil de moulage (1).

14. Procédé selon la revendication 13,
**caractérisé en ce que**
un capteur de vide (10) mesure en permanence ou à des intervalles de temps constants, le vide régnant dans une zone sous vide (5, 6, 7) et le signal ainsi généré est utilisé pour la commande de soupapes à vide (11, 12, 13, 14, 15, 16, 17), une soupape à vide suivante n'étant activée que lorsque, au niveau de la zone sous vide exposée précédemment à un vide, un vide défini a été mesuré.

15. Procédé selon la revendication 14,
**caractérisé en ce que**
l'adjonction de la couche de matériau au support (2) pour la fabrication de l'élément composite n'est démarrée que lorsque le dernier capteur de vide (10) de la dernière zone sous vide (5, 6, 7) a mesuré le vide défini.

16. Procédé selon la revendication 13,
**caractérisé en ce que**
l'adjonction de la couche de matériau au support (2) pour la fabrication de l'élément composite n'est démarrée que lorsqu'au moins un capteur de vide (10) a mesuré une valeur minimale d'un vide à l'intérieur d'au moins un circuit de vide (8, 9) ou d'un vide de plusieurs zones sous vide (5, 6, 7).
